# EUROPÄISCHE PATENTANMELDUNG

(11) **EP 3 226 088 A1**
(43) Veröffentlichungstag der Anmeldung: **04.10.2017**
(21) Anmeldenummer: 17157307.4
(22) Anmeldetag: 22.02.2017
(51) Int. Cl.: G05B 19/042

(54) **ANZEIGE- UND BEDIENEINHEIT UND VERFAHREN ZUR BEDIENUNG EINES FELDGERÄTS MIT EINER ANZEIGE- UND BEDIENEINHEIT**

(30) Priorität: 01.04.2016 DE 102016106003
(71) Anmelder: Sick AG, 79183 Waldkirch (DE)
(72) Erfinder: Beha, Martin, 79211 Denzlingen (DE)

(57) **Zusammenfassung**

Anzeige- und Bedieneinheit mit einer Webapplikation (12) zur Bedienung eines Feldgeräts (1) und Verfahren zur Bedienung eines Feldgeräts (1) mit einer Anzeige- und Bedieneinheit (4) mit einer Webapplikation (12), wobei die Anzeige- und Bedieneinheit (4) mit dem Feldgerät (1) verbunden wird, wobei zumindest ein Parameter des Feldgeräts (1) auf der Anzeige- und Bedieneinheit (4) mittels der Webapplikation (12) visualisiert wird und eine Parametrierung des Feldgeräts (1) ermöglicht wird und die Webapplikation (12) zur Visualisierung und/oder Parametrierung in einem Browser (2) ausgeführt wird, wobei der Browser (2) auf der Anzeige- und Bedieneinheit (4) ausgeführt wird, wobei der Browser (2) und/oder die Webapplikation (12) eine Schnittstelle aufweist mit welcher ein direkter Zugriff auf Komponenten (20) oder Betriebssystem-Komponenten (10) der Anzeige- und Bedieneinheit (4), auf Komponenten (20) des Feldgerätes (1) und/oder auf externen Einheiten (13) durchgeführt wird.

## Beschreibung

Die vorliegende Erfindung betrifft eine Anzeige- und Bedieneinheit nach dem Oberbegriff von Anspruch 1 und ein Verfahren zur Bedienung eines Feldgeräts mit einer Anzeige- und Bedieneinheit nach dem Oberbegriff von Anspruch 12.

Ein Einsatz von Webtechnologien zur Erzeugung und/oder Darstellung einer Bedienoberfläche für ein Feldgerät auf unterschiedlichen Mensch-Maschine-Interface (HMI) Einheiten und/oder Displays nach dem Stand der Technik wird durch Sicherheitsmechanismen beim Einsatz eines Standardbrowsers, z. B. Firefox oder Chrome behindert. Bestimmte Anwendungsfälle in der Bedienung können nur umständlich mit Hilfe eines lokalen Webservers oder durch die Installation eines Browser-Plugins realisiert werden. Vor allem ein direkter Zugriff auf die Hardware der HMI-Einheit und/oder des Displays ist nicht möglich.

Beispielsweise ist ein direkter Hardwarezugriff, beispielsweise auf ein Dateisystem eines USB-Sticks vom Browser nach dem Stand der Technik nicht ohne Weiteres möglich.

Des Weiteren ist die Verwendung eines Standardbrowsers im Umfeld eines eingebetteten Systems mit beschränkten Ressourcen nicht empfehlenswert, da ein Standardbrowser nach dem Stand der Technik einen leistungsfähigen Rechner voraussetzt.

Im Wesentlichen gibt es die folgenden Lösungsansätze, um eine Browserbeschränkung zu umgehen. Erstens die Implementierung eines Browser-Plugins. Zweitens die Verwendung eines signierten Java Applets und drittens die Verwendung eines lokalen Webservers auf dem Client.

Das Browser-Plugin muss für unterschiedliche Standardbrowser z. B. Firefox, Chrome, Internet-Explorer usw. separat implementiert werden. Speziell das Plugin-Konzept unterscheidet sich von Browser zu Browser. Durch den Einsatz einer Plugin-Architektur ist die Browserimplementierung aufwändig, da jeder Browser individuell berücksichtigt werden muss.

Der Einsatz von JavaApplets ist ggf. mit Sicherheitsrisiken verbunden, da im Zusammenhang mit dem Einsatz von JavaApplets Sicherheitslücken entdeckt wurden. Weiter wird für den Betrieb eines JavaApplets eine Java VM (Java Virtuelle Maschine) benötigt, welche einen hohen Anspruch an die Hardware besitzt. Zusätzlich ist der alleinige Einsatzzweck von Java als Schnittstelle verhältnismäßig hoch.

Diese beiden Ansätze basieren darauf, dass speziell mit dem Einsatz von Java, eine gewisse Rechenperformance vorausgesetzt wird. Diese benötigte Rechenperformance zusammen mit der benötigten Performance einer WebEngine würde ein eingebettetes System je nach Prozessor entsprechend überfordern.

Der Einsatz eines lokalen Webservers bringt beim Betrieb des Mensch-Maschine-Interfaces eine zusätzliche Softwarekomponente ins Spiel. Jeweilige Anfragen und Antworten führen zu einem entsprechenden Verwaltungsaufwand und zu einer zeitlichen Verzögerung. Weiter ist ein Webserver je nach Implementierung ggf. angreifbar.

Eine Aufgabe der Erfindung besteht darin, eine verbesserte Anzeige- und Bedieneinheit bereitzustellen, die an eine Vielzahl von Feldgeräten anschließbar ist, bzw. welche selbst unterschiedlich ausgebildet sein kann.

Die Aufgabe wird gemäß Anspruch 1 gelöst durch eine Anzeige- und Bedieneinheit mit einer Webapplikation zur Bedienung eines Feldgeräts, wobei die Anzeige- und Bedieneinheit mit dem Feldgerät verbindbar ist, wobei zumindest ein Parameter des Feldgeräts auf der Anzeige- und Bedieneinheit mittels der Webapplikation visualisiert ist und eine Parametrierung des Feldgeräts ermöglicht ist und die Webapplikation zur Visualisierung und/oder Parametrierung in einem Browser ausgeführt ist, wobei der Browser auf der Anzeige- und Bedieneinheit ausgeführt ist, wobei der Browser und/oder die Webapplikation eine Schnittstelle aufweist, welche ausgebildet ist einen direkten Zugriff auf Komponenten oder Betriebssystem-Komponenten der Anzeige- und Bedieneinheit, auf Komponenten des Feldgerätes und/oder auf externen Einheiten durchzuführen.

Die Aufgabe wird weiter gelöst durch ein Verfahren zur Bedienung eines Feldgeräts mit einer Anzeige- und Bedieneinheit mit einer Webapplikation, wobei die Anzeige- und Bedieneinheit mit dem Feldgerät verbunden wird, wobei zumindest ein Parameter des Feldgeräts auf der Anzeige- und Bedieneinheit mittels der Webapplikation visualisiert wird und eine Parametrierung des Feldgeräts ermöglicht wird und die Webapplikation zur Visualisierung und/oder Parametrierung in einem Browser ausgeführt wird, wobei der Browser auf der Anzeige- und Bedieneinheit ausgeführt wird, wobei der Browser und/oder die Webapplikation eine Schnittstelle aufweist mit welcher ein direkter Zugriff auf Komponenten oder Betriebssystem-Komponenten der Anzeige- und Bedieneinheit, auf Komponenten des Feldgerätes und/oder auf externen Einheiten durchgeführt wird.

Insbesondere betrifft die Erfindung Feldgeräte der Prozessautomatisierung, also beispielsweise einen Analysator, einen Transmitter, insbesondere O₂-Transmitter, Feldgeräte zur Rauchgasuntersuchung, wie z. B. Partikelmessgeräte, Spektrometer, Laserscanner und dergleichen.

Bei der Anzeige- und Bedieneinheit kann es sich beispielsweise um ein Display mit Touchscreen-Eigenschaft handeln, welches mit dem bloßen Finger bedienbar ist. Wenn ein Benutzer Textdaten eingeben möchte, wird beispielsweise eine Bildschirmtastatur eingeblendet.

Die Anzeige- und Bedieneinheit basiert auf Webtechnologien. Die Anzeige- und Bedieneinheit wird beispielsweise an das Feldgerät angeschlossen oder ist direkt mit dem Feldgerät verbunden. Nach dem Anschluss verbindet sich die Anzeige- und Bedieneinheit elektronisch automatisch mit dem Feldgerät.

Die Erfindung ermöglicht einen direkten Zugriff der Webapplikation bzw. eines Programmes auf die spezifische Hardware der Anzeige- und Bedieneinheit. Zu diesem Zweck ist ein quasi minimaler Browser implementiert.

Ein großer Vorteil beim Einsatz von Webtechnologien ergibt sich dadurch, dass der Aufwand für eine Entwicklung einer Anwenderschnittstelle also eine ,Userinterface` Entwicklung reduziert wird. Eine einmal entwickelte Webapplikation kann sowohl in der Anzeige- und Bedieneinheit, in einem Standardbrowser und sogar in einer App, also einer Anwendung für Tablets bzw. Smartphones eingesetzt werden.

Durch den Einsatz von Webtechnologien wird auch quasi eine einheitliche Technologie für verschiedene Endgeräte eingesetzt.

Durch die Implementierung des speziellen erfindungsgemäßen Browsers, welcher in der Anzeige- und Bedieneinheit eingesetzt wird, können die Beschränkungen eines Standardbrowsers umgangen werden.

Gemäß der Erfindung kann direkt über die Webapplikation im Browser auf Komponenten bzw. Betriebssystem-Komponenten zugegriffen werden.

In Weiterbildung der Erfindung weist das Feldgerät einen Webserver auf. Nach Anschluss verbindet sich die Anzeige- und Bedieneinheit automatisch mit dem integrierten Webserver des Feldgerätes. Der Webserver des Feldgerätes stellt die Webapplikation zur Verfügung, welche in dem Browser der Anzeige- und Bedieneinheit ausgeführt wird.

Der Webserver ist ein Server, der Dokumente an den Browser bzw. Webbrowser überträgt. Als Webserver bezeichnet man den Computer mit Webserver-Software oder nur die Webserver-Software selbst in dem Feldgerät.

Die Hauptaufgabe des Webservers ist die Auslieferung von statischen Dateien, z. B. unveränderlichen HTML- oder Bild-Dateien, oder dynamisch erzeugten Dateien, z. B. Seiten, deren Inhalte stets individuell gemäß dem Profil der Anzeige- und Bedieneinheit erstellt werden.

Bevorzugt ist die Webapplikation in HTML, JavaScript und CSS geschrieben.

Die Hypertext Markup Language (engl. für Hypertext-Auszeichnungssprache), abgekürzt HTML, ist eine textbasierte Auszeichnungssprache zur Strukturierung digitaler Dokumente wie Texte mit Hyperlinks, Bildern und anderen Inhalten. HTML-Dokumente sind die Grundlage des World Wide Web und werden von Webbrowsern dargestellt. Neben den vom Browser angezeigten Inhalten können HTML-Dateien zusätzliche Angaben in Form von Metainformationen enthalten.

HTML dient als Auszeichnungssprache dazu, einen Text semantisch zu strukturieren, nicht aber zu formatieren. Die visuelle Darstellung ist nicht Teil der HTML-Spezifikationen und wird durch den Browser bzw. Webbrowser und Gestaltungsvorlagen wie CSS bestimmt.

JavaScript (kurz JS) ist eine Skriptsprache, die ursprünglich für dynamisches HTML in Webbrowsern entwickelt wurde, um Benutzerinteraktionen auszuwerten, Inhalte zu verändern, nachzuladen oder zu generieren und so die Möglichkeiten von HTML und CSS zu erweitern.

Der als ECMAScript (ECMA 262) standardisierte Sprachkern von JavaScript beschreibt eine dynamisch typisierte, objektorientierte, aber klassenlose Skriptsprache. Sie wird allen objektorientierten Programmierparadigmen unter anderem auf der Basis von Prototypen gerecht. In JavaScript lässt sich objektorientiert und sowohl prozedural als auch funktional programmieren.

Cascading Style Sheets (gestufte Gestaltungsbögen), kurz CSS genannt, ist eine Stylesheet-Sprache für elektronische Dokumente und zusammen mit HTML und DOM eine der Kernsprachen des World Wide Webs. Sie ist ein sogenannter lebendiger Standard und wird vom World Wide Web Consortium (W3C) beständig weiterentwickelt. Mit CSS werden Gestaltungsanweisungen erstellt, die vor allem zusammen mit den Auszeichnungssprachen HTML und XML eingesetzt werden.

Für eine komplette Webseite werden in der Regel die HTML-Seite inklusive verknüpfter Designbeschreibungen (CSS) und Bilddateien (JPG, PNG, GIF, Flash) jeweils als einzelne Dateien übertragen. Für jede benötigte Datei muss der Browser bzw. Webbrowser eine eigene Anfrage an den Webserver senden.

Mit JavaScript wird eine Webtechnologie verwendet, welche den Browser direkt unterstützt. Es müssen keine zusätzlichen Programme, die zum Teil angreifbar sind und eine gewisse Performance aufweisende Hardware eingesetzt werden, wie beispielsweise Java VM oder lokale Webserver.

Weiter kann der implementierte Browser bzw. die Webapplikation sehr einfach ausgebildet sein, da Programmbestandteile wie eine Plugin-Verwaltung nicht benötigt werden. Der minimale Browser ist auf das Wesentliche reduziert, nämlich das Rendering und die Anzeige von HTML, CSS und JavaScript.

Der Einsatz ist auf einem Embedded System möglich. Der Ausdruck Embedded System bzw. eingebettetes System bezeichnet einen elektronischen Rechner oder auch einen Computer, der in einen technischen Kontext eingebunden bzw. eingebettet ist. Dabei übernimmt der Rechner entweder Überwachungs-, Steuerungs- oder Regelfunktionen oder ist für eine Form der Daten- bzw. Signalverarbeitung des Feldgerätes bzw. der Anzeige- und Bedieneinheit zuständig.

Meist sind eingebettet Systeme speziell an eine Aufgabe angepasst. Aus Kostengründen wird eine optimierte, gemischte Hardware-Software-Implementierung gewählt. Dabei vereinigt eine solche Konstruktion die große Flexibilität von Software mit der Leistungsfähigkeit der Hardware. Die Software dient dabei sowohl zur Steuerung des Systems selbst, also des Feldgeräts als auch ggf. zur Interaktion des Systems mit der Außenwelt über definierte Schnittstellen oder Protokolle.

In Weiterbildung der Erfindung ist die Schnittstelle ein JavaScript-Interface. Der erfindungsgemäße Browser stellt ein spezielles JavaScript-Interface, insbesondere eine spezielle JavaScript API bereit, wobei API für Applikation Programm Interface steht. Diese erlaubt dann z. B. den direkten Zugriff auf die Hardware der Anzeige- und Bedieneinheit. Ein zusätzlicher Webserver auf der Anzeige- und Bedieneinheit selbst wird somit nicht benötigt.

Der Zugriff aus der Webapplikation bzw. der Webanwendung heraus kann dann per JavaScript-Funktionen erfolgen. Damit können z. B. Daten direkt abgelegt werden, oder eine Hardware kann direkt angesprochen werden.

Zum direkten Zugriff auf die Komponenten bzw. Betriebssystem-Komponenten wird ein JavaScript-Interface implementiert, welches auf die Komponenten bzw. Betriebssystem-Komponenten angepasst ist und den direkten Zugriff aus der Webapplikation heraus erlaubt. In der Webapplikation selbst ist es einfach möglich festzustellen, ob das JavaScript-Interface zur Verfügung steht oder nicht. Somit können in der Web-Oberfläche dargestellte Funktionen der Webapplikation auch entsprechend ein- bzw. ausgeblendet werden, wenn das JavaScript-Interface nicht zur Verfügung steht.

Das Vorhandensein des JavaScript-Interface kann auf einfache Art und Weise ermittelt werden und somit Einfluss auf den dargestellten Funktionsumfang der Webapplikation, bzw. der Web-Anwendung haben.

Das JavaScript-Interface ist dabei ein fester Bestandteil des erfindungsgemäßen minimalen Browsers. Als minimaler Browser wird der erfindungsgemäße Browser bezeichnet, welcher in der Lage ist, HTML(5) in Verbindung mit CSS zu rendern und JavaScript Code auszuführen. Auf jegliche nicht benötigte Funktionen wird bei der Implementierung verzichtet.

Der speziell entwickelte Browser hat noch weitere Vorteile. Andere Feldgeräte können direkt gefunden werden, da im Browser spezielle Scan-Programme integrierbar sind, um einen Gerätescan auszuführen, dessen Ergebnis im zweiten Schritt per JavaScript-API dem Programm zur Verfügung gestellt wird.

Beispielsweise wird die JavaScript-API dazu verwendet eine native, im Betriebssystem der Anzeige- und Bedieneinheit vorhandene Bildschirmtastatur einzublenden.

In Weiterbildung der Erfindung weist das JavaScript-Interface eine WebEngine auf, zur Ausführung von JavaScript-Code. Eine WebEngine kann auch synonym als JavaScript-Programm bezeichnet werden, bzw. als JavaScript-Engine bzw. als WebEngine mit JavaScript-Interpreter. Eine WebEngine kann auch als HTML-Renderer bezeichnet werden.

Die JavaScript-API der WebEngine wird durch eigene JavaScript Funktionen erweitert. Die eingesetzte WebEngine muss ein entsprechendes Erweiterungskonzept unterstützen.

Somit kann aus der Web-Anwendung bzw. der Webapplikation heraus, welche in HTML, JavaScript und CSS geschrieben ist, ein direkter Aufruf z. B. der Funktion ,sick_js_writeFile (...)' erfolgen. Diese Methode ist letztendlich in C++ implementiert und wird zusammen mit der Gesamtanwendung, nämlich dem Browser kompiliert. Somit ist ein direkter Zugriff auf die Hardware möglich.

Bezüglich der Ausführung des JavaScript-Codes gelten bis auf diese Zugriffe, die gleichen Beschränkungen wie bei der Ausführung in einem Standardbrowser.

Bevorzugt ist der Aufruf der speziellen Hardwarezugriffsfunktionen auf Hersteller spezifische Webapplikationen bzw. Webanwendungen bzw. Web-Programme beschränkt. Somit lässt sich die Sicherheit entsprechend erhöhen.

In einer weiteren Ausführungsform weist die WebEngine eine Programm-Bibliothek auf. Eine Programm-Bibliothek bezeichnet eine Sammlung von Unterprogrammen/- Routinen, die Lösungswege für thematisch zusammengehörende Problemstellungen anbieten. Bibliotheken sind im Unterschied zu Webapplikationen bzw. Programmen keine eigenständig lauffähigen Einheiten, sondern sie enthalten Hilfsmodule, die von der Webapplikation angefordert werden.

Vorzugsweise ist die WebEngine in der Programmiersprache C++ implementiert. C++ ist eine von der ISO genormte Programmiersprache. C++ ermöglicht sowohl die effiziente und maschinennahe Programmierung als auch eine Programmierung auf hohem Abstraktionsniveau. Der Standard definiert auch eine Standardbibliothek, zu der verschiedene Implementierungen existieren.

Die Sprache C++ besteht aus einem Sprachkern mit sehr wenigen Schlüsselwörtern Ihre eigentliche Funktionalität erhält sie, ähnlich wie auch die Sprache C, durch die C++-Standardbibliothek sowie, je nach Einsatzgebiet, zusätzliche Bibliotheken und Frameworks. C++ legt einen Schwerpunkt auf die Sprachmittel zur Entwicklung von Bibliotheken.

Eine der Stärken von C++ ist die Kombinierbarkeit von effizienter, maschinennaher Programmierung mit mächtigen Sprachmitteln, die einfache bis komplexe Implementierungsdetails zusammenfassen. Dabei kommt vor allem die Template-Metaprogrammierung zum Zuge, eine Technik, die eine nahezu kompromisslose Verbindung von Effizienz und Abstraktion erlaubt.

In Weiterbildung der Erfindung sind die Betriebssystem-Komponenten Treiber für ein Dateisystem, Treiber für das Display und/oder Treiber für ein Netzwerk.

Ein Gerätetreiber, häufig kurz nur Treiber genannt, ist ein Computerprogramm oder Softwaremodul, das die Interaktion mit angeschlossener, eingebauter Hardware oder virtuellen Geräten steuert. Dazu kommuniziert der Treiber auf der einen Seite meist direkt mit dem Gerät, nämlich der Anzeige- und Bedieneinheit bzw. des Feldgeräts und tauscht Steuersignale beziehungsweise Daten mit dem Gerät aus, über den Kommunikationsbus, beispielsweise eine Hardware-Schnittstelle oder ein Basis-Kommunikationssystem des Betriebssystems. Auf der anderen Seite bietet der Treiber dem Betriebssystem und/oder der Webapplikation bzw. der Anwendungssoftware eine genormte Schnittstelle, so dass dieses konkrete Gerät auf gleiche Weise angesprochen werden kann wie gleichartige Geräte anderer Hersteller.

Die Hauptaufgabe von Gerätetreibern ist das Bereitstellen von hardwarenahen Funktionen durch eine Hardwareabstraktionsschicht. Viele Arten von Geräten sind unterschiedlich, selbst Geräte, die denselben Zweck erfüllen. Sogar die verschiedenen Modelle eines Feldgerätes desselben Herstellers, die zum Beispiel neue Funktionen oder mehr Leistung aufweisen, werden oft völlig anders angesteuert.

Von Computern und ihren Betriebssystemen kann nicht erwartet werden, dass sie mit all diesen verschiedenen Arten umgehen können, erst recht nicht mit zukünftigen Geräten. Um dieses Problem zu lösen, gibt das Betriebssystem vor, wie eine Klasse von Geräten angesprochen werden sollte. Die Gerätetreiber kümmern sich dann um die Übersetzung dieser Funktionsaufrufe des Betriebssystems in gerätespezifische Steuersignale. Damit soll also auch ein völlig neues Gerät mit völlig neuer Ansteuerung problemlos funktionieren, sobald ein Treiber für dieses Gerät vorliegt. Das Betriebssystem kann es mit denselben Funktionsaufrufen ansprechen, wie jedes andere Gerät auch.

Oft existieren viele verschiedene Varianten eines Treibers, in erster Linie abhängig von der unterstützten Hardware, oft auch in verschiedenen Versionen. Zudem muss für jedes unterstützte Betriebssystem eine Variante existieren, da die Schnittstellen hierzu zum Beispiel bei verschiedenen Betriebssystemen stark unterschiedlich sind. Weiterhin besteht eine Abhängigkeit von der grundlegenden Architektur des Rechners und des Betriebssystems, auch von der Verarbeitungsbandbreite. Ist kein Treiber für ein bestimmtes Betriebssystem oder eine Architektur vorhanden, kann unter Umständen eine entsprechende Umgebung emuliert, also weitere Abstraktionsschichten hinzugefügt werden.

Ohne passenden Treiber ist eine Hardwarekomponente daher nutzlos, wenn sie nicht autonom arbeitet und auf Unterstützung durch Software angewiesen ist.

Beispielsweise kann ein Kontrast oder eine Helligkeitseinstellung für die Anzeige- und Bedieneinheit eingestellt werden. Hierzu ist ein Treiber für die Anzeige und Bedieneinheit vorgesehen, um den Kontrast oder eine Helligkeitseinstellung vorzunehmen. Bevorzugt ist die Anzeige- und Bedieneinheit ein Engineering-Tool, ein Smartphone, ein Tablet-PC, ein Notebook oder ein Desktop-PC.

Der integrierte Webserver kann auch per Browser auf einem Smartphone, einem Tablet-PC, einem Notebook oder einem Desktop-PC aufgerufen werden, vorausgesetzt es besteht ebenfalls eine Verbindung zwischen der Anzeige- und Bedieneinheit und dem Feldgerät, beispielsweise per Ethernet oder WLAN. Trotz der Verwendung einer einheitlichen Technologie, nämlich der Webtechnologie können unterschiedlichste Geräte genutzt werden.

In einer bevorzugten Ausführungsform ist die Anzeige- und Bedieneinheit mit dem Feldgerät über eine Ethernet-Verbindung verbunden. Ethernet ist eine Technologie, die Software, nämlich Protokolle usw. und Hardware, nämlich Kabel, Verteiler, Netzwerkkarten usw. für kabelgebundene Datennetze spezifiziert, welche ursprünglich für lokale Datennetze (LANs) gedacht war und daher auch als LAN-Technik bezeichnet wird. Sie ermöglicht den Datenaustausch in Form von Datenframes zwischen den in einem lokalen Netz (LAN) angeschlossenen Geräten. Derzeit sind Übertragungsraten von 10 Megabit/s, 100 Megabit/s (Fast Ethernet), 1000 Megabit/s (Gigabit-Ethernet), 10, 40 und 100 Gigabit/s spezifiziert. Ethernet über Glasfaser hat eine Reichweite von 10 km und mehr.

In Weiterbildung ist die externe Einheit ein mobiler steckbarer USB-Speicher. USB-Massenspeicher sind Geräte, die über den Universal Serial Bus (USB) kommunizieren und einen eingebauten Datenspeicher besitzen und überwiegend als Wechseldatenträger benutzt werden. Häufige Verwendung finden sie in Form von USB-Speichersticks, verkürzt und verallgemeinert auch USB-Sticks genannt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

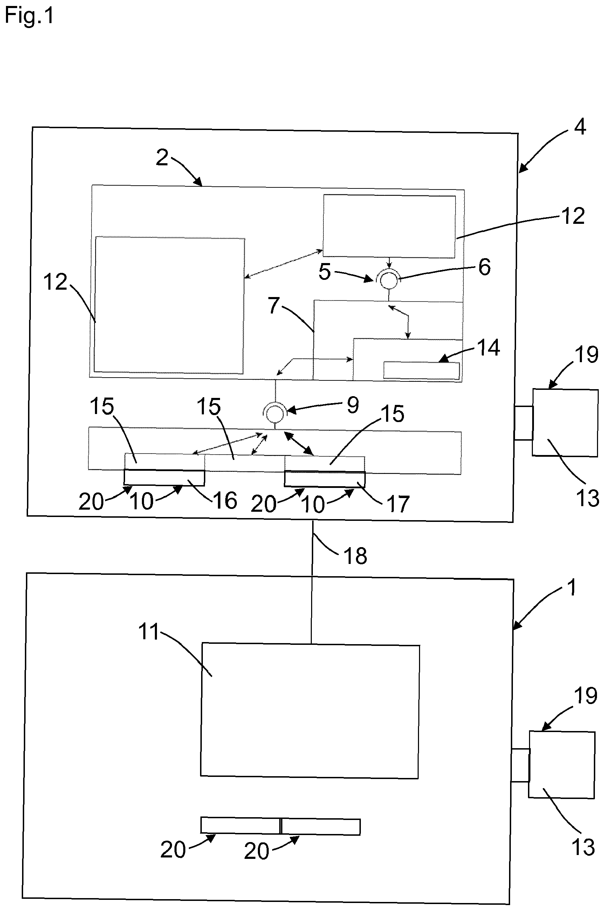

Figur 1 eine Anzeige- und Bedieneinheit mit einer Webapplikation zur Bedienung eines Feldgeräts.

In den nachfolgenden Figuren sind identische Teile mit identischen Bezugszeichen versehen.

Figur 1 zeigt eine Anzeige- und Bedieneinheit 4 mit einer Webapplikation 12 zur Bedienung eines Feldgeräts 1, wobei die Anzeige- und Bedieneinheit 4 mit dem Feldgerät 1 verbindbar ist, wobei zumindest ein Parameter des Feldgeräts 1 auf der Anzeige- und Bedieneinheit 4 mittels der Webapplikation 12 visualisiert ist und eine Parametrierung des Feldgeräts 1 ermöglicht ist und die Webapplikation 12 zur Visualisierung und/oder Parametrierung in einem Browser 2 ausgeführt ist, wobei der Browser 2 auf der Anzeige- und Bedieneinheit 4 ausgeführt ist, wobei der Browser 2 und/oder die Webapplikation 12 eine Schnittstelle 5 aufweist, welche ausgebildet ist einen direkten Zugriff auf Komponenten 20 oder Betriebssystem-Komponenten 10 der Anzeige- und Bedieneinheit 4, auf Komponenten 20 des Feldgerätes 1 und/oder auf externen Einheiten 13 durchzuführen. Gemäß Figur 1 ist die externe Einheit 13 ein mobiler steckbarer USB-Speicher 19.

Die Anzeige- und Bedieneinheit 4 wird beispielsweise an das Feldgerät 1 angeschlossen oder ist direkt mit dem Feldgerät 1 verbunden. Nach dem Anschluss verbindet sich die Anzeige- und Bedieneinheit 4 elektronisch automatisch mit dem Feldgerät 1.

Der Browser 2 ermöglicht einen direkten Zugriff der Webapplikation 12 bzw. des Programms auf die spezifische Hardware der Anzeige- und Bedieneinheit 4.

Gemäß Figur 1 weist das Feldgerät 1 einen Webserver 11 auf. Nach Anschluss verbindet sich die Anzeige- und Bedieneinheit 4 automatisch mit dem integrierten Webserver 11 des Feldgerätes 1. Der Webserver 11 des Feldgerätes 1 stellt die Webapplikation 12 zur Verfügung, welche in dem Browser 2 der Anzeige- und Bedieneinheit 4 ausgeführt wird.

Der minimale Browser 2 ist auf das Wesentliche reduziert, nämlich das Rendering und die Anzeige von HTML, CSS und JavaScript. Gemäß Figur 1 ist die Schnittstelle 5 ein JavaScript-Interface 6.

Der Browser 2 stellt ein spezielles JavaScript-Interface 6, insbesondere eine spezielle JavaScript-API bereit. Diese erlaubt dann z. B. den direkten Zugriff auf die Hardware der Anzeige und Bedieneinheit 4.

Der Zugriff aus der Webapplikation 12 bzw. der Webanwendung heraus kann dann per JavaScript-Funktionen erfolgen. Damit können z. B. Daten direkt abgelegt werden, oder eine Hardware, nämlich ein Dateisystem 16 oder ein Netzwerk 17 kann direkt angesprochen werden.

Zum direkten Zugriff auf die Komponenten 20 bzw. Betriebssystem-Komponenten 10 ist das JavaScript-Interface 6 implementiert, welches auf die Komponenten 20 bzw. Betriebssystem-Komponenten 10 angepasst ist und den direkten Zugriff aus der Webapplikation 12 heraus erlaubt.

Das JavaScript-Interface 6 ist dabei ein fester Bestandteil des minimalen Browsers 2. Als minimaler Browser 2 wird der Browser 2 bezeichnet, welcher in der Lage ist, HTML(5) in Verbindung mit CSS zu rendern und JavaScript-Code auszuführen. Auf jegliche nicht benötigte Funktionen wird bei der Implementierung verzichtet.

Der speziell entwickelte Browser 2 hat noch weitere Vorteile. Andere Feldgeräte 1 können direkt gefunden werden, da im Browser 2 spezielle Scan-Programme integrierbar sind um einen Gerätescan auszuführen, dessen Ergebnis im zweiten Schritt per JavaScript-API dem Programm 12 zur Verfügung gestellt wird.

Gemäß Figur 1 weist das JavaScript-Interface 6 eine WebEngine 7 auf zur Ausführung von JavaScript-Code. Gemäß Figur 1 weist die WebEngine 7 eine Programm-Bibliothek 14 auf.

Gemäß Figur 1 sind die Betriebssystem-Komponenten 10 Treiber 15 für ein Dateisystem 16, Treiber 15 für die Anzeige und Bedieneinheit 4 bzw. ein Display und/oder Treiber 15 für ein Netzwerk 17. Die Treiber können beispielsweise über eine Betriebssystem-Interface 9 angesprochen werden.

Beispielsweise kann ein Kontrast oder eine Helligkeitseinstellung für die Anzeige- und Bedieneinheit 4 bzw. das Display eingestellt werden. Hierzu ist der Treiber 15 für die Anzeige und Bedieneinheit 4 vorgesehen, um den Kontrast oder eine Helligkeitseinstellung vorzunehmen.

Bevorzugt ist die Anzeige- und Bedieneinheit 4 ein Engineering-Tool, ein Smartphone, ein Tablet-PC, ein Notebook oder ein Desktop-PC.

Der integrierte Webserver 11 des Feldgerätes 1 kann auch per Browser 2 auf einem Smartphone, einem Tablet-PC, einem Notebook oder einem Desktop-PC aufgerufen werden, vorausgesetzt es besteht ebenfalls eine Verbindung zwischen der Anzeige- und Bedieneinheit 4 und dem Feldgerät 1, beispielsweise per Ethernet 18 oder WLAN. Gemäß Figur 1 ist die Anzeige- und Bedieneinheit 4 mit dem Feldgerät 1 über eine Ethernet-Verbindung 18 verbunden.

### Bezugszeichen:

- 1: Feldgerät
- 2: Browser
- 4: Anzeige- und Bedieneinheit
- 5: Schnittstelle
- 6: JavaScript-Interface
- 7: WebEngine
- 8: Betriebssystem
- 9: Betriebssystem-Interface
- 10: Betriebssystem-Komponente
- 11: Webserver
- 12: Webapplikation
- 13: externe Einheit
- 14: Programm-Bibliothek
- 15: Treiber
- 16: Dateisystem
- 17: Netzwerk
- 18: Ethernet-Verbindung
- 19: mobiler steckbarer USB-Speicher
- 20: Komponente

## Patentansprüche

1. Anzeige- und Bedieneinheit mit einer Webapplikation (12) zur Bedienung eines Feldgeräts (1), wobei die Anzeige- und Bedieneinheit (4) mit dem Feldgerät (1) verbindbar ist, wobei zumindest ein Parameter des Feldgeräts (1) auf der An- zeige- und Bedieneinheit (4) mittels der Webapplikation (12) visualisiert ist und eine Parametrierung des Feldgeräts (1) ermöglicht ist und die Webapplikation (12) zur Visualisierung und/oder Parametrierung in einem Browser (2) ausgeführt ist, wobei der Browser (2) auf der Anzeige- und Bedieneinheit (4) ausgeführt ist,
**dadurch gekennzeichnet, dass**
der Browser (2) und/oder die Webapplikation (12) eine Schnittstelle (5) aufweist, welche ausgebildet ist einen direkten Zugriff auf Komponenten (20) oder Betriebssystem-Komponenten (10) der Anzeige- und Bedieneinheit (4), auf Komponenten (20) des Feldgerätes (1) und/oder auf externen Einheiten (13) durchzuführen.

2. Anzeige- und Bedieneinheit zur Bedienung eines Feldgeräts (1) nach mindestens einem der vorhergehenden Ansprüche, **dadurch gekennzeichnet, dass** das Feldgerät (1) einen Webserver (11) aufweist.

3. Anzeige- und Bedieneinheit zur Bedienung eines Feldgeräts (1) nach Anspruch 1, **dadurch gekennzeichnet, dass** die Webapplikation (12) in HTML, JavaScript und CSS geschrieben ist.

4. Anzeige- und Bedieneinheit zur Bedienung eines Feldgeräts (1) nach mindestens einem der vorhergehenden Ansprüche, **dadurch gekennzeichnet, dass** die Schnittstelle (5) ein JavaScript-Interface (6) ist.

5. Anzeige- und Bedieneinheit zur Bedienung eines Feldgeräts (1) nach mindestens einem der vorhergehenden Ansprüche, **dadurch gekennzeichnet, dass** die Anzeige- und Bedieneinheit (4) eine WebEngine (7) und ein JavaScript-Interface (6) aufweist zur Ausführung von JavaScript-Code.

6. Anzeige- und Bedieneinheit zur Bedienung eines Feldgeräts (1) nach mindestens einem der vorhergehenden Ansprüche, **dadurch gekennzeichnet, dass** die WebEngine (7) eine Programm-Bibliothek (14) aufweist.

7. Anzeige- und Bedieneinheit zur Bedienung eines Feldgeräts (1) nach mindestens einem der vorhergehenden Ansprüche, **dadurch gekennzeichnet, dass** die WebEngine (7) in der Programmiersprache C++ implementiert ist.

8. Anzeige- und Bedieneinheit zur Bedienung eines Feldgeräts (1) nach mindestens einem der vorhergehenden Ansprüche, **dadurch gekennzeichnet, dass** die Betriebssystem-Komponenten (10) mindestens ein Treiber (15) für ein Dateisystem (16), mindestens ein Treiber (15) für die Anzeige- und Bedieneinheit (4) und/oder mindestens ein Treiber (15) für ein Netzwerk (17) ist.

9. Anzeige- und Bedieneinheit zur Bedienung eines Feldgeräts (1) nach mindestens einem der vorhergehenden Ansprüche, **dadurch gekennzeichnet, dass** die Anzeige- und Bedieneinheit (4) ein Engineering Tool, ein Smartphone, ein Tablet-PC, ein Notebook oder ein Desktop-PC ist.

10. Anzeige- und Bedieneinheit zur Bedienung eines Feldgeräts (1) nach mindestens einem der vorhergehenden Ansprüche, **dadurch gekennzeichnet, dass** die Anzeige- und Bedieneinheit (4) mit dem Feldgerät (1) über eine Ethernet-Verbindung (18) verbunden ist.

11. Anzeige- und Bedieneinheit zur Bedienung eines Feldgeräts (1) nach mindestens einem der vorhergehenden Ansprüche, **dadurch gekennzeichnet, dass** die externe Einheit (13) ein mobiler steckbarer USB-Speicher (19) ist.

12. Verfahren zur Bedienung eines Feldgeräts (1) mit einer Anzeige- und Bedieneinheit (4) mit einer Webapplikation (12), wobei die Anzeige- und Bedieneinheit (4) mit dem Feldgerät (1) verbunden wird, wobei zumindest ein Parameter des Feldgeräts (1) auf der Anzeige- und Bedieneinheit (4) mittels der Webapplikation (12) visualisiert wird und eine Parametrierung des Feldgeräts (1) ermöglicht wird und die Webapplikation (12) zur Visualisierung und/oder Parametrierung in einem Browser (2) ausgeführt wird, wobei der Browser (2) auf der Anzeige- und Bedieneinheit (4) ausgeführt wird,
**dadurch gekennzeichnet, dass**
der Browser (2) und/oder die Webapplikation (12) eine Schnittstelle aufweist mit welcher ein direkter Zugriff auf Komponenten (20) oder Betriebssystem-Komponenten (10) der Anzeige- und Bedieneinheit (4), auf Komponenten (20) des Feldgerätes (1) und/oder auf externen Einheiten (13) durchgeführt wird.

13. Verfahren zur Bedienung eines Feldgeräts (1) mit einer Anzeige- und Bedieneinheit (4) mit einer Webapplikation (12) nach Anspruch 12, **dadurch gekennzeichnet, dass** das JavaScript-Interface (6) eine WebEngine (7) aufweist zur Ausführung von JavaScript-Code.

14. Verfahren zur Bedienung eines Feldgeräts (1) mit einer Anzeige- und Bedieneinheit (4) mit einer Webapplikation (12) nach mindestens einem der vorhergehenden Ansprüche 1 bis 13, **dadurch gekennzeichnet, dass** die Anzeige- und Bedieneinheit (4) mit dem Feldgerät (1) über eine Ethernet-Verbindung (18) verbunden wird.
